# EUROPEAN PATENT APPLICATION

(11) **EP 2 312 518 A1**
(43) Date of publication of application: **20.04.2011**
(21) Application number: 10187460.0
(22) Date of filing: 13.10.2010
(51) Int. Cl.: G06Q 30/00

(54) **Information distribution**

(30) Priority: 15.10.2009 US 587942
(71) Applicant: Sony Corporation, Tokyo 108-0075 (JP); Sony Electronics Inc., Park Ridge, NJ 07656 (US)
(72) Inventor: Loughery III, Donald L, Long Beach, CA 90803 (US); Frazier, Milton, San Marcos, CA 92069 (US); Rainier, Rajiv, San Diego, CA 92127 (US); Jacobs, Stephen, Ardsley, NY 10022 (US); Noronha, Austin, Sunnyvale, CA 94086 (US); Smith, Tim, Carlsbad, CA 92011 (US)
(74) Representative: Scaddan, Gareth Casey

(57) **Abstract**

A system for implementing an information distribution network includes an information service that is configured to provide information distribution services through the information distribution network. User devices are utilized by device users to communicate with the information service for receiving the information distribution services. Transport structures are implemented for communicating with various network entities in the information distribution network. The transport structures collect appropriate metadata for providing selected information from the information service to targeted ones of the device users. A bid marketplace is provided for advertisers to utilize for participating in a binding procedure for obtaining acquisition rights to the metadata.

## Description

### Field of the Invention

This invention relates to information distribution. Embodiments of the invention relate generally to techniques for distributing electronic information, and relate more particularly to a system and method for supporting a bidding procedure in an electronic network.

### Background of the Invention

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for supporting a bidding procedure in an electronic network are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata files that define both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, the electronic network, and respective advertisers from an information service. In addition, the transport structures may also be utilized to provide links to targeted advertisements and/or electronic content to appropriate user devices.

In certain embodiments, one or more transport structures are initially created in any effective manner. For example, the transport structures may be embedded in user devices during manufacture, and then activated by device users. Alternately, an appropriate entity in the distribution system may create or otherwise provide the initial transport structures. Next, device users may perform a registration procedure to subscribe for receiving information from the distribution system. During the registration procedure, the device users typically provide various types of relevant information including, but not limited to, user metadata and device metadata. The transport structures are updated to include the metadata provided by the device users during the foregoing registration procedure.

In certain embodiments, the transport structures may be provided to a transport server in the distribution system. A metadata manager or other appropriate entity in the distribution system may then analyze the transport structures using any appropriate techniques to identify and aggregate the metadata contained in the transport structures. In accordance with certain embodiments of the present invention, a bid marketplace is provided in the distribution system to support the bidding procedure. In particular, advertisers or other appropriate entities may utilize the bid marketplace to engage in the bidding procedure by placing bids or offers to acquire certain acquisition rights with respect to the transport structures and the corresponding collected metadata.

In certain embodiments, the winners of the foregoing bidding procedure may then advantageously access and utilize the acquired metadata to more accurately target advertisements and other information to specific device users and corresponding user devices. The winning advertisers typically utilize the distribution network to provide relevant advertisements to the targeted device users. In certain embodiments, the transport structures may be utilized to provide media links to the targeted device users for accessing the advertisement information. The device users may then utilize corresponding user devices to view the received advertisement information.

In certain embodiments, usage metadata In the transport structures may be updated to reflect any relevant information related to the foregoing transmission of advertising information to the targeted device users. Finally, the usage metadata may be provided as feedback information to the advertisers to thereby allow the advertisers to evaluate the effectiveness and efficiency of their advertising strategies. For at least the foregoing reasons, embodiments of the present invention therefore seek to provide an improved system and method for supporting a bidding procedure in an electronic network.

### Brief Description of the Drawings

Embodiments of the invention will now be described with reference to the accompanying drawings, throughout which like parts are referred to by like references, and in which:
FIG. 1 is a block diagram of a distribution system, in accordance with one embodiment of the present invention;
FIG. 2A is a block diagram for one embodiment of a transport structure;
FIG. 2B is a block diagram for one embodiment of a media file;
FIG. 3 is a block diagram for one embodiment of a user device from FIG. 1;
FIG. 4 is a block diagram for one embodiment of the user memory from FIG. 3;
FIG. 5 is a block diagram for one embodiment of the information service from FIG. 1;
FIG. 6A is a block diagram for one embodiment of the transport server from FIG. 5;
FIG. 6B is a block diagram for one embodiment of the server memory from FIG. 6A;
FIG. 7 is a block diagram for one embodiment of the ad server from FIG. 5;
FIG. 8A is a block diagram for one embodiment of the bid marketplace from FIG. 5;
FIG. 8B is a block diagram for one embodiment of the marketplace memory from FIG. 8A; and
FIGS. 9A-9C are a flowchart of method steps for performing a bidding procedure, in accordance with one embodiment of the present invention.

### Description of the Example Embodiments

Embodiments of the present invention relate to an improvement in electronic data distribution techniques. The following description is presented to enable one of ordinary skill in the art to make and use embodiments of the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but is to be accorded the widest scope consistent with the principles and features described herein.

An embodiment of the present invention comprises a system for implementing an information distribution network, and includes an information service that is configured to provide information distribution services through the information distribution network. User devices are utilized by device users to communicate with the information service for receiving the information distribution services. Transport structures are implemented for communicating with various network entities in the information distribution network. The transport structures collect appropriate metadata for providing selected information from the information service to targeted ones of the device users. In accordance with an embodiment of the present invention, a bid marketplace is supported for advertisers to utilize for participating in a bidding procedure for obtaining acquisition rights to the collected metadata.

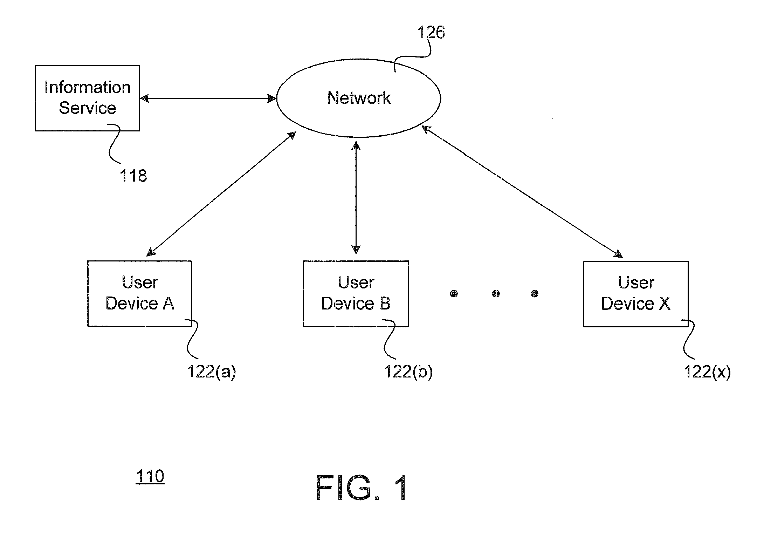

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1 embodiment.

In accordance with an embodiment of the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines the device users and the various advertisers.

In the FIG. 1 embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118.

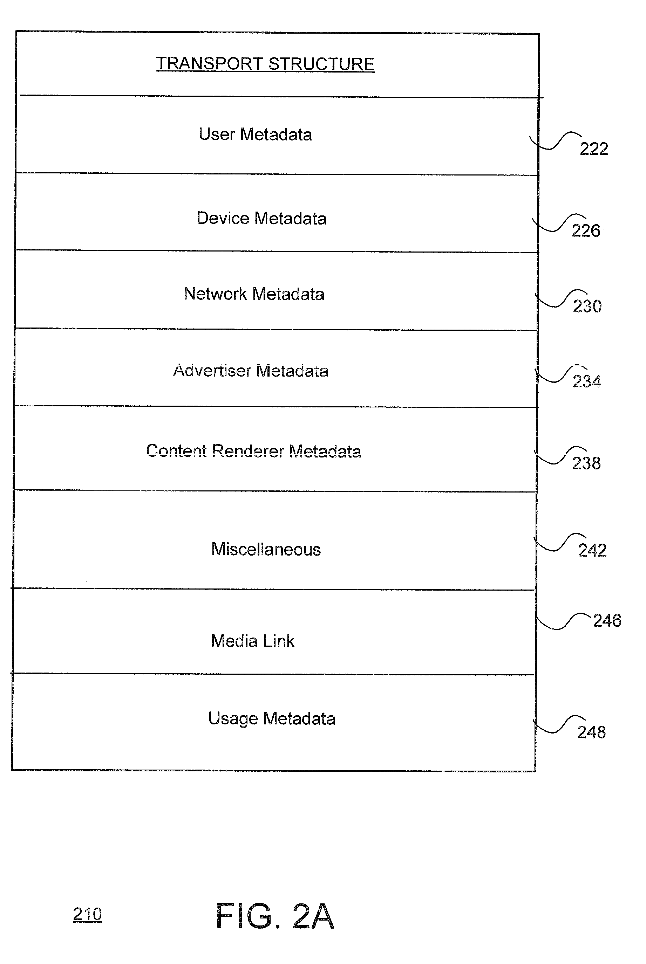

In accordance with an embodiment of the present invention, distribution system 110 may advantageously support and utilize one or more transport structures (see FIG. 2A) that automatically transport various types of relevant information to and from appropriate entities in distribution system 110. For example, the transport structures may be utilized to gather and transfer metadata regarding the various device users, the user devices 122, the network 126, and respective advertisers from information service 118. In addition, the transport structures may also be utilized to transport or provide links to targeted advertisements and/or electronic content for appropriate user devices 122.

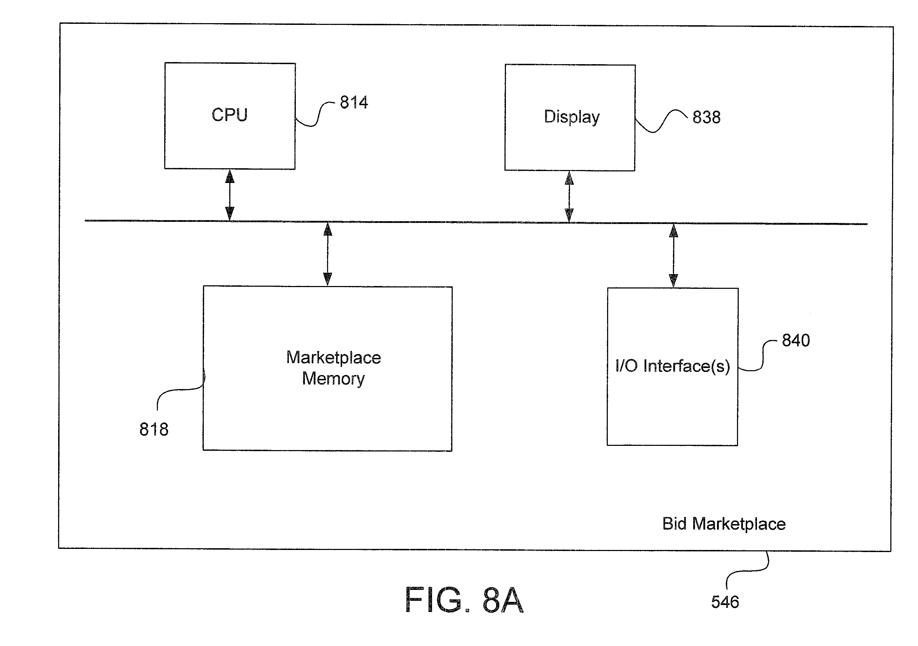

In accordance with an embodiment of the present invention, information service 118 may provide a bid marketplace (see FIGS. 8A-8B) that supports a bidding procedure during which advertisers or other appropriate entities may bid or otherwise make offers to acquire relevant metadata information from corresponding transport structures. The advertisers may then analyze the acquired metadata information for more accurately targeting relevant advertising and other information to corresponding target device users and respective user devices 122. Embodiments of the present invention thus seek to provide an improved system and method for supporting a bidding procedure in an electronic network. Further details regarding the implementation and utilization of transport structures in the FIG. 1 distribution system 110 are discussed below in conjunction with FIGS. 2A-9C.

Referring now to FIG. 2A, a block diagram for one embodiment of a transport structure 210 is shown. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

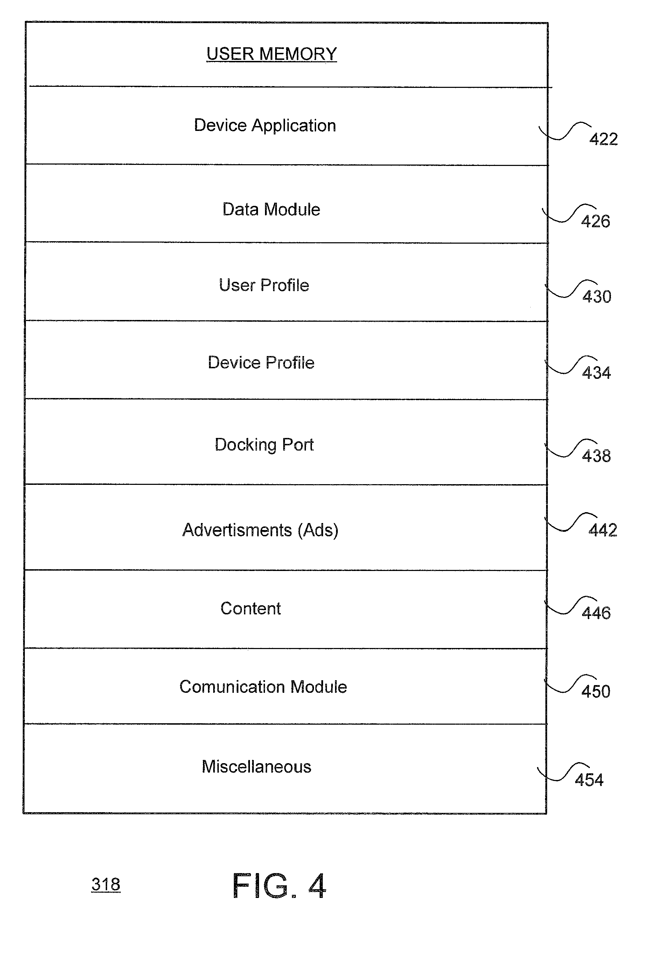

In the FIG. 2A embodiment, each of the metadata categories/fields includes information from one or more devices or entities from respective corresponding metadata-source types. For example, user metadata 222 may include information regarding one or more device users of user devices 122 (FIG. 1). In certain embodiments, user metadata 222 may be selectively compiled from one or more appropriate user profiles 430 (see FIG. 4). Similarly, device metadata 226 may include information regarding one or more user devices 122. In certain embodiments, device metadata 226 may be selectively compiled from one or more appropriate device profiles 434 (see FIG. 4). In the FIG. 2A embodiment, network metadata 230 may include information regarding various attributes or entities of electronic network 126 (FIG. 1).

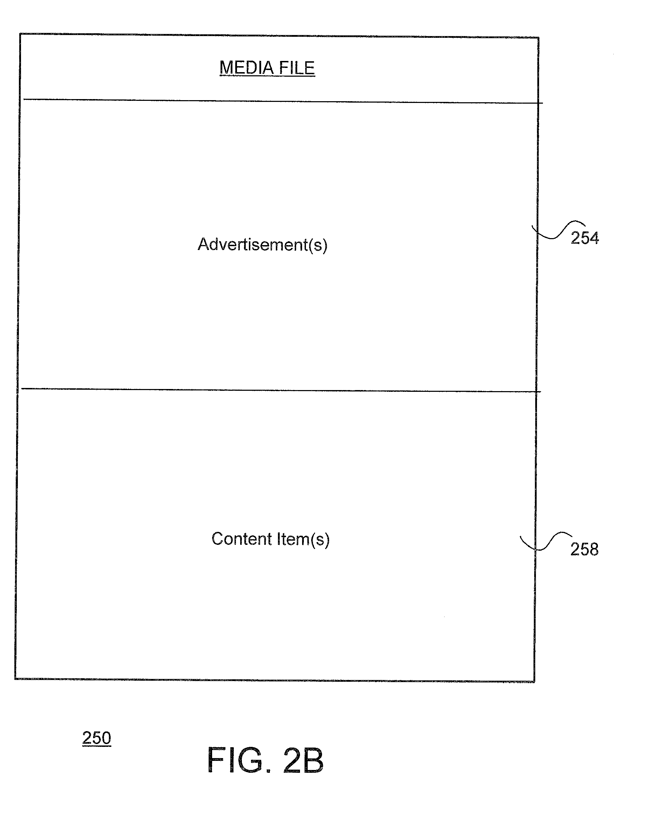

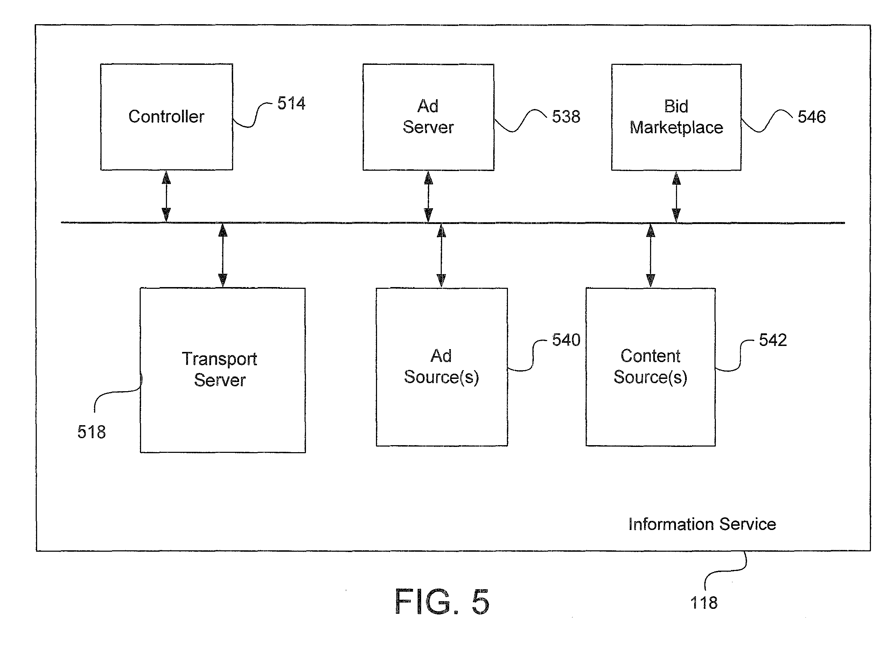

In the FIG. 2A embodiment, advertiser metadata 234 may include information regarding one or more advertisers that are associated with distribution system 110. In certain embodiments, the advertisers may be associated with ad sources 540 (FIG. 5). Similarly, content renderer metadata 238 may include information regarding one or more content renderers that are associated with distribution system 110. In certain embodiments, the content renderers may be associated with content sources 542 (FIG. 5). In the FIG. 2A embodiment, miscellaneous information 242 may include any additional data or other appropriate information. Media link 246 may include appropriate information to indicate a location or a connection means for accessing one or more media files, as discussed below in conjunction with FIG. 2B. Usage metadata 248 in the transport structures 210 may be updated to reflect any relevant information related to the transmission of advertising information to the user devices 122 of the targeted device users.

Various entities in distribution system 110 may utilize the information in transport structure 210 in any appropriate manner. For example, an ad targeting procedure may be performed by matching compatible elements of user metadata 222, device metadata 226, and advertiser metadata 234 to thereby identify appropriate types of relevant advertising information for automatic transmission to targeted device users.

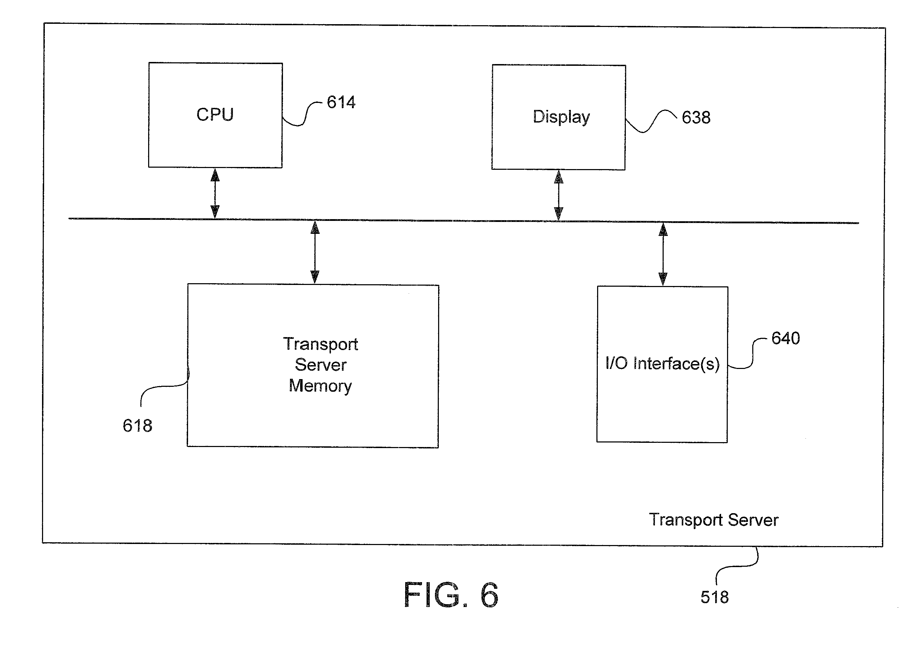

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210. For example, a transport server (see FIG. 6A) may manage the origination and operation of transport structures 210. Further details regarding the implementation and utilization of the FIG. 2A transport structure 210 are discussed below in conjunction with FIGS. 2B-9C.

Referring now to FIG. 2B, a block diagram for one embodiment of a media file 250 is shown. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented as an integral part of transport structure 210 of FIG. 2A.

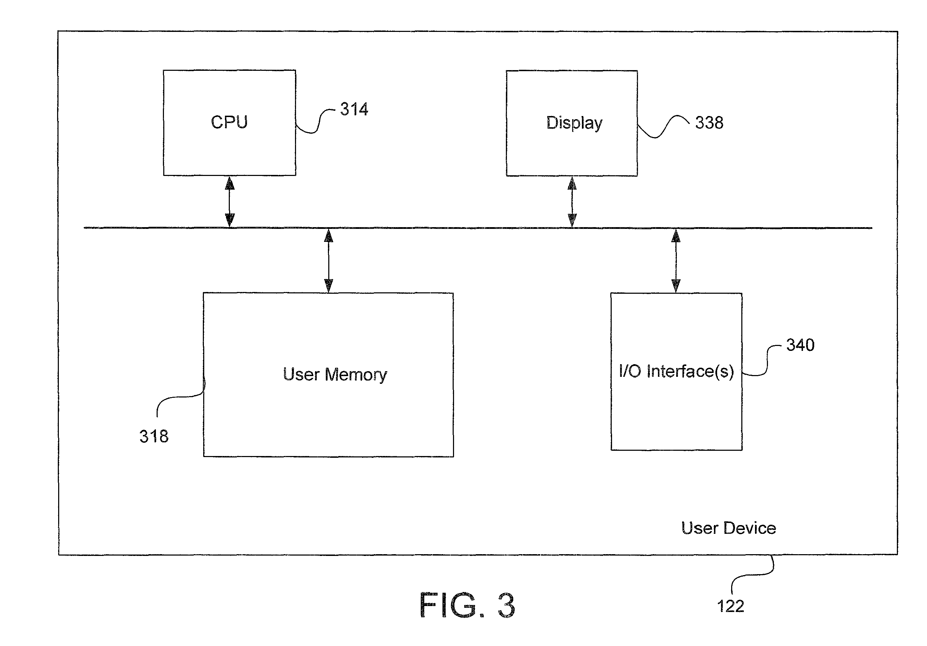

In the FIG. 2B embodiment, advertisements (ads) 254 may include any appropriate type of targeted advertising information that has been selected for transmission to appropriate ones of the user devices 122 (FIG. 1). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-9C.

Referring now to FIG. 3, a block diagram for one embodiment of a FIG. 1 user device 122 is shown. In the FIG. 3 embodiment, user device 122 includes, but is not limited to, a central processing unit (CPU) 314, a memory 318, a display 338, and one or more input/output interface(s) (I/O interface(s)) 340. The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122. In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. Additional details for the utilization of user device 122 are further discussed below in conjunction with FIGS. 4-9C.

Referring now to FIG. 4, a block diagram for one embodiment of the FIG. 3 user memory 318 is shown. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In the FIG. 4 embodiment, user device 122 utilizes data module 426 to manage a user profile 430 and a device profiles 434 that collectively described any desired attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, and credit-card transaction records. Similary, device profile 434 may include, but is not limited to, a device type, a device manufacturer, supported device functionalities, a device location, and a device configuration.

In the FIG. 4 embodiment, docking port 438 may include any appropriate type of interface means to facilitate bi-directional communications between one or more transport structures 210 (FIG. 2) and a user device 122. In the FIG. 4 embodiment, advertisements (ads) 442 may include targeted advertising information that has been received via distribution system 110 (FIG. 1) specifically for a device user of user device 122. Similarly, content 446 may include targeted electronic content information that has been received via distribution system 110 (FIG. 1) specifically for a device user of user device 122.

In the FIG. 4 embodiment, a user device 122 may utilize communication module 450 to perform bi-directional electronic communication procedures with any appropriate remote entity. In the FIG. 4 embodiment, miscellaneous information 454 may include any appropriate additional information or data for utilization by user device 122. For example, in certain embodiments, miscellaneous information 454 may include various types of metadata relating to other entities in distribution system 110 that was downloaded from one or more transport structures 210. Further details regarding the implementation and utilization of the FIG. 4 user memory 318 are discussed below in conjunction with FIGS. 5-9C.

Referring now to FIG. 5, a block diagram for one embodiment of the FIG. 1 information service 118 is shown. In the FIG. 5 embodiment, information service 118 includes, but is not limited to, a controller 514, a transport server 518, an ad server 538, one or more ad sources 540, one or more content sources 542, and a bid marketplace 546. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating and monitoring operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

in the FiG. 5 embodiment, transport server 518 may include any effective means for communicating with and controlling one or more transport structures 210 (FIG. 2). Additional details regarding the implementation and utilization of transport server 518 are further discussed below in conjunction with FIGS. 6A-6B. In the FIG. 5 embodiment, ad source(s) 540 may include one or more appropriate entities for providing advertisement information for dissemination through distribution system 110 (FIG. 1). For example, ad sources 540 may include various commercial enterprises, specific advertisers, or advertising developers.

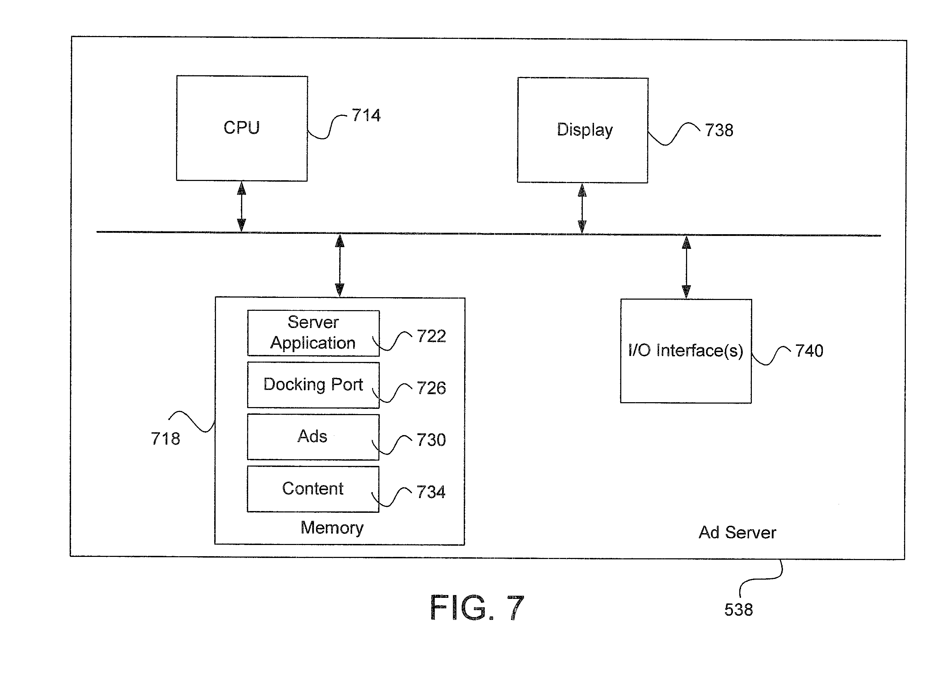

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1) by utilizing metadata from one or more transport structures 210 (FIG. 2). One embodiment of ad server 538 is further discussed below in conjunction with FIG. 7.

In the FIG. 5 embodiment, bid marketplace 546 may include any effective means for supporting a bidding procedure that allows advertisers or other appropriate entities to bid or otherwise make offers to acquire relevant metadata information from corresponding transport structures 210 (FIG. 2A). The advertisers may then analyze the acquired metadata information for more accurately targeting relevant advertising and other information to corresponding target device users and respective user devices 122. One embodiment of ad bid marketplace 546 is further discussed below in conjunction with FIGS. 8A-8B. Additional details for the implementation and utilization of information service 118 are further discussed below in conjunction with FIGS. 6A-9C.

Referring now to FIG. 6A, a block diagram for one embodiment of the transport server 518 of FIG. 5 is shown. In the FIG. 6A embodiment, transport server 518 includes, but is not limited to, a central processing unit (CPU) 614, a memory 618, a display 638, and one or more input/output interfaces(s) I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG.6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by user device 122. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

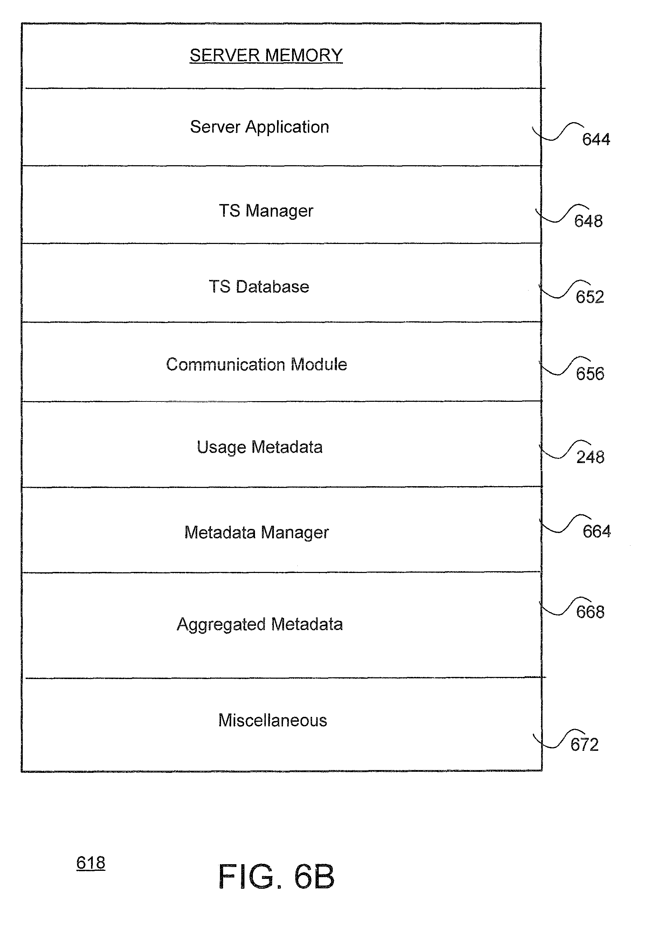

Referring now to FIG. 6B, a block diagram for one embodiment of the FIG. 6A transport server memory 618 is shown. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A). In certain embodiments, the TS manager 648 may include a registration module for coordinating registration procedures to register device users of user devices 122 for participating in various authorized distribution services from distribution system 110 (FIG. 1). A TS database 652 may include any appropriate information regarding the transport structures 210 that provide distribution services to various entities in distribution system 110.

In certain embodiments, the TS manager 648 may continually update respective transport structure information in the TS database 652 to reflect the current status of transport structures 210 in distribution system 110. The transport server 518 may utilize a communication module 656 to perform bi-directional electronic communication procedures with any appropriate remote entity. For example, the communication module 656 may be utilized to remotely communicate with transport structures 210 in distribution system 110. Usage metadata 248 may include any relevant information related to the transmission of advertising information to the user devices 122 of the targeted device users.

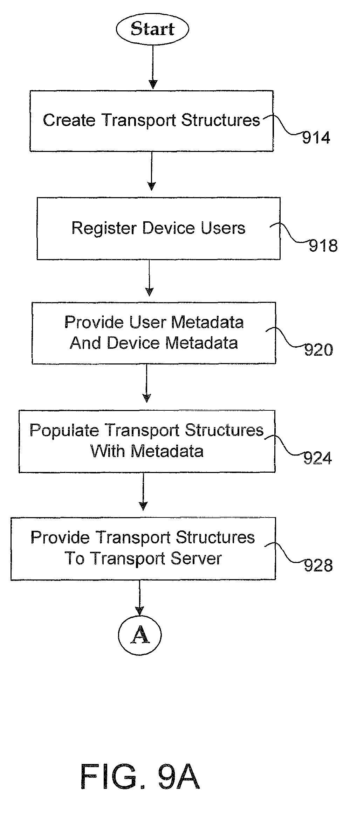

In the FIG. 6B embodiment, a metadata manager 664 or other appropriate entity may perform a metadata analysis/aggregation procedure upon metadata from transport structures 210 by utilizing any effective techniques. In certain embodiments, the metadata analysis/aggregation procedure identifies various types and categories of aggregated metadata 668 for presentation to advertisers during a bidding procedure. In certain embodiments, metadata manager 664 may analyze the metadata gathered from user devices 122 and corresponding device users in light of certain predefined criteria to identify specific targeting characteristics and parameters in aggregated metadata 668. For example, targeting characteristics may include, but are not limited to, selected characteristics from user metadata 222, device metadata 226, network metadata 230, and advertiser metadata 234 (see FIG. 2A). In the FIG. 6B embodiment, miscellaneous information 672 may include any desired type of information or data for utilization by transport server 518. The utilization of transport server 518 is further discussed below in conjunction with FIGS. 9A-9C.

Referring now to FIG. 7, a block diagram for one embodiment of the ad server 538 of FIG. 5 is shown. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operations of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze metadata from transport structures 210 (FIG. 2A) to match appropriate media files 250 (FIG. 2B) with targeted device users of user devices 122 (FIG. 3).

In the FIG. 7 embodiment, docking port 726 may include any effective interface means for ad server 538 to bi-directionally communicate with one or more transport structures 210 (FIG. 2) to transfer ads 730 and/or content 734. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

Referring now to FIG. 8A, a block diagram for one embodiment of the bid marketplace 546 of FIG. 5 is shown. In the FIG. 8A embodiment, bid marketplace 546 includes, but is not limited to, a central processing unit (CPU) 814, a marketplace memory 818, a display 838, and one or more input/output interface(s) (I/O interface(s)) 840. The FIG. 8A embodiment is presented for purposes of illustration, and in alternate embodiments, bid marketplace 546 may be implemented using components and configurations in addition to, or instead of, certain of those components and configurations discussed in conjunction with the FIG. 8A embodiment.

In the FIG. 8A embodiment, CPU 814 may be implemented to include any appropriate and compatible microprocessor device that preferably executes software instructions to thereby control and manage the operation of bid marketplace 546. The FIG. 8A display 838 may include any effective type of display technology including a cathode-ray-tube monitor or a liquid-crystal display device with an appropriate screen for displaying various information to a device user. In the FIG. 8A embodiment, I/O interface(s) 840 may include one or more input and/or output interfaces to receive and/or transmit any required types of information by bid marketplace 546. In the FIG. 8A embodiment, marketplace memory 818 may be implemented to include any combination of desired storage devices, including, but not limited to, read-only memory (ROM), random-access memory (RAM), and various types of non-volatile memory, such as floppy disks, memory sticks, compact disks, or hard disks.

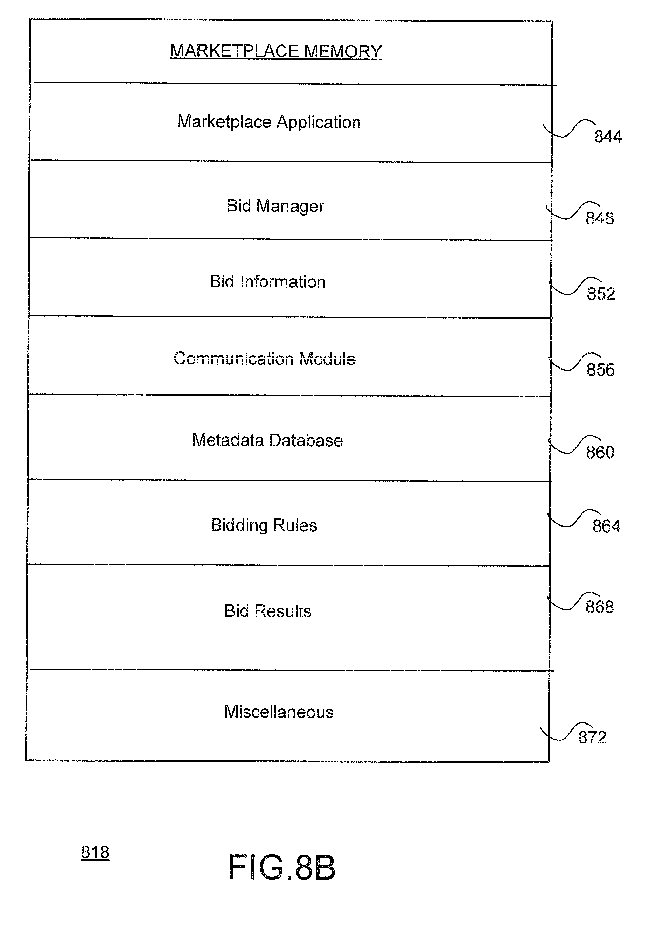

Referring now to FIG. 8B, a block diagram for one embodiment of the FIG. 8A marketplace memory 818 is shown. In alternate embodiments, marketplace memories 818 may be implemented by utilizing components and configurations in addition to, or instead of, certain of those components and configurations discussed in conjunction with the FIG. 8B embodiment.

In the FIG. 8B embodiment, marketplace memory 818 may include, but is not limited to, a number of software programs and data that are disclosed below. For example, marketplace memory 818 may include a marketplace application 844 of program instructions that are preferably executed by CPU 814 to perform various functions and operations for bid marketplace 546. The particular nature and functionality of marketplace application 844 typically varies depending upon factors such as the specific type and particular functionality of the corresponding bid marketplace 546.

In the FIG. 8B embodiment, a bid manager 848 may coordinate a bidding procedure during which advertisers or other appropriate entities may bid or otherwise make offers to acquire relevant aggregated metadata 668 (FIG. 6B) that is collected from corresponding transport structures 210 and stored in a metadata database 860. In certain alternate embodiments, advertisers may bid to acquire the actual transport structures 210. In the FIG. 8B embodiment, the advertiser bids or offers may be locally stored as bid information 852.

In the FIG. 8B embodiment, bid manager 848 may analyze bid information 852 in light of specific predefined bidding rules 864 to determine one or more bidding winners. In the FIG. 8B embodiment, the results of the bidding procedure may be stored as bid results 868. The bidding winners may then be notified and allowed to access the aggregated metadata 668 (FIG. 6B) or transport structures 210 (FIG. 2A) in metadata database 860. In certain embodiments, the bid marketplace 546 may utilize a communication module 856 to perform bi-directional electronic communication procedures with any appropriate remote entity. In the FIG. 6B embodiment, miscellaneous information 872 may include any desired type of information or data for utilization by bid marketplace 546.

Because the transport structures 210 (FIG. 2A) are implemented as dynamic structures that contain user and device information, as well as customizable data fields for new applications, then a new business model can be supported where one entity places and grows the transport structures 210 for the intended business to sell the transport structures 210 (or their collected metadata) to an existing or emerging advertising network. This advertising network would derive value from being able to define, in a more precise manner, the user, devices and business rules to serve media and advertising to consumers.

In certain embodiments, a business entity may be established to place "dynamic" transport structures 210 onto consumer platforms, and then provide a bid marketplace 546 to bid on metadata from the transport structures 210 based upon a level of targeting available, because of the specific types of metadata offered. These transport structures 210 could be placed onto electronic devices prior to purchase. These transport structures 210 also could be placed on networks and then served at the moment of authentication of a new device. The transport structures 210 could be placed on the network concurrent with the original purchase transaction of a device or service that is related to the device.

The narrower the desired targeting of advertisements, the more valuable the metadata in the transport structure 210 becomes to advertisers. Groups of transport structures 210 or their stored metadata may be aggregated with access to the metadata of those transport structures 210 being then offered to advertisers during the bidding procedure. For example, one aggregation might include metadata representing 40-year-old males in zipcode 92011, or 40-yr-old males that use IPTV and also watch MTV. Another example might be Facebook users in zipcode 92011, but restricted to media that is played on IPTV platforms. These transport structures 210 may also track user purchasing behavior. Variations on the foregoing business model may include rental/buy/license uses, as well as rights to alter or move. The implementation and utilization of bid manager 848 of bid marketplace 546 is further discussed below in conjunction with FIGS. 9A-9C.

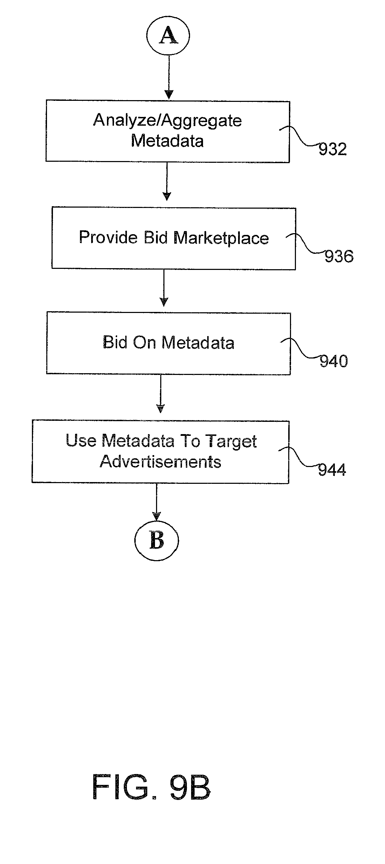

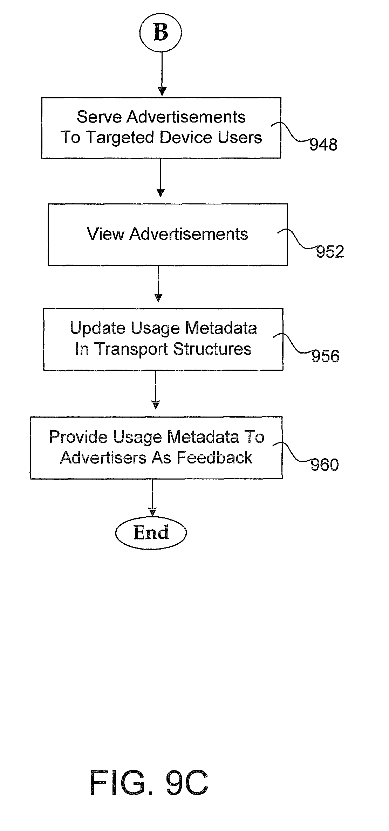

Referring now to FIGS. 9A-9C, a flowchart of method steps for performing a bidding procedure is shown, in accordance with one embodiment of the present invention. The FIG. 9 flowchart is presented for purposes of illustration, and in alternate embodiments, the present invention may utilize steps and sequences other than those steps and sequences discussed in conjunction with the FIG. 9 embodiment.

In step 914 of FIG. 9A, one or more transport structures 210 (FIG. 2A) are initially created in any effective manner. For example, transport structures 210 may be embedded in user devices 122 during manufacture, and then activated by device users. Alternately, an appropriate entity in a distribution system 110 may create or otherwise provide the initial transport structures 210. In step 918, one or more device users perform a registration procedure to receive information from the distribution system 110.

In step 920, during the registration procedure, the device users typically provide relevant information including, but not limited to, user metadata 222 and device metadata 226. In step 924, the transport structures 210 are populated to include the metadata provided by the device users during the foregoing registration procedure. In step 928, the transport structures 210 may then be provided to a transport server 518 through distribution system 110. The FIG. 9A process then advances to step 932 of FIG. 9B through connecting letter "A."

In step 932, a metadata manager 664 or other appropriate entity in distribution system 110 analyzes the transport structures 210 using any appropriate techniques to identify and aggregate the metadata contained in the transport structures 210. In step 936, a bid marketplace 546 is provided in distribution system 110 to support the bidding procedure. In step 940, advertisers or other appropriate entities may then engage in the bidding procedure by placing bids or offers to acquire certain acquisition rights with respect to the transport structures 210 and the corresponding collected metadata. In step 944, winners of the foregoing bidding procedure may access and utilize the acquired metadata to more accurately target advertisements and other information to specific device users and corresponding user devices 122. The FIG. 9B process then advances to step 948 of FIG. 9C through connecting letter "B."

In step 948, the winning advertisers utilize distribution network 110 to serve relevant advertisements to targeted device users that were identified in foregoing step 948. In certain embodiments, transport structures 210 may be utilized to provide media links to the targeted device users for accessing the advertisement information. In step 952, device users may utilize corresponding user devices 122 to view the targeted advertisement information. In step 956, usage metadata 248 in the transport structures 210 may be updated to reflect any relevant information related to the foregoing transmission of advertising information to the user devices 122 of the targeted device users.

Finally, in step 960, the usage metadata 248 may be provided as feedback information to the advertisers to thereby allow the advertisers to evaluate the effectiveness and efficiency of their advertising strategies. The FIG. 9 process may then terminate. For at least the foregoing reasons, embodiments of the present invention therefore seek to provide an improved system and method for supporting a bidding procedure in an electronic network.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

According to one embodiment, there is provided a system according to claim 9 wherein said selected information in said media file includes advertising information and electronic content.

According to another embodiment, there is provided a system according to claim 12 wherein said user metadata includes a personal name, gender, age, religion, hobbies, interests, occupation, marital status, residence, income, Internet browsing history, and credit-card transaction records of said device users.

Various further aspects and features of the present invention are set out in the following numbered clauses:
1. A user device comprising:
   a data module that manages metadata that is related to said user device and to a device user of said user device;
   a transport structure that provides said metadata to an information service; and
   a communication module that transmits said transport structure to said information service, said metadata being utilized by said information service to support a bidding procedure by which advertisers obtain acquisition rights to said metadata for sending one or more targeted advertisements to said device user.
2. The user device of clause 1 wherein bidding procedure is managed by a bid marketplace that is implemented as a computer device in said information distribution network.
3. The user device of clause 1 wherein said bidding procedure is coordinated by a bid manager according predefined bidding rules.
4. The user device of clause 1 wherein a transport server manages said transport structure.
5. The user device of clause 4 wherein a metadata manager of said transport server performs an aggregation procedure upon said metadata to create aggregated metadata for said bidding procedure.
6. The user device of clause 5 wherein said aggregation procedure identifies categories of said aggregated metadata for presentation to said advertisers during said bidding procedure, said categories being defined by predefined criteria to identify specific targeting characteristics from said aggregated metadata.

## Claims

1. A system for implementing an information distribution network, comprising:
an information service that is configured to provide information distribution services through said information distribution network;
user devices that device users utilize to communicate with said information service for receiving said information distribution services;
a transport structure that communicates with network entities in said information distribution network, said transport structure collecting metadata for providing selected information from said information service to targeted ones of said device users; and
a bid marketplace that advertisers utilize to participate in a bidding procedure for obtaining acquisition rights to said metadata.

2. The system of claim 1 wherein said bid marketplace is implemented as a computer device in said information distribution network.

3. The system of claim 2 wherein said bidding procedure is coordinated by a bid manager according predefined bidding rules.

4. The system of claim 1 further comprising a transport server that manages said transport structure.

5. The system of claim 4 wherein a metadata manager of said transport server performs an aggregation procedure upon said metadata to create aggregated metadata for said bidding procedure.

6. The system of claim 5 wherein said aggregation procedure identifies categories of said aggregated metadata for presentation to said advertisers during said bidding procedure, said categories being defined by predefined criteria to identify specific targeting characteristics from said aggregated metadata.

7. The system of claim 6 wherein said aggregated metadata increases in value to said advertisers as said categories become more specifically targeted.

8. The system of claim 1 wherein said metadata includes user metadata regarding said device users, device metadata regarding said user devices, and advertiser metadata regarding said advertisers associated with said selected information.

9. The system of claim 1 wherein said transport structure includes a media link to a media file that contains said selected information.

10. The system of claim 1 wherein said transport structure includes usage metadata that is updated with transfer information corresponding to each transfer of said selected information to said user devices.

11. The system of claim 1 wherein said transport structure moves through said information distribution network to collect said metadata, said transport structure also providing media links for said selected information to said targeted ones of said device users.

12. The system of claim 1 wherein said advertisers utilize a push technique to automatically select and transmit only said selected information that is relevant to said device users in light of specific characteristics provided in said metadata.

13. The system of claim 8 wherein said selected information is targeted to said device users by matching aspects of said selected information and said advertiser metadata to specific characteristics from said user metadata and said device metadata.

14. The system of claim 1 wherein said information service is implemented and supported by a distribution control entity that offers access to said bid marketplace to said advertisers in return for financial or other compensation, said distribution control entity being a commercial enterprise that maintains and controls key elements of said information service.

15. A user device comprising:
a data module that manages metadata that is related to said user device and to a device user of said user device;
a transport structure that provides said metadata to an information service;
and
a communication module that transmits said transport structure to said information service, said metadata being utilized by said information service to support a bidding procedure by which advertisers obtain acquisition rights to said metadata for sending one or more targeted advertisements to said device user.
